# EUROPEAN PATENT SPECIFICATION

(11) **EP 2 325 454 B1**
(45) Date of publication and mention of the grant of the patent: **18.03.2015**
(21) Application number: 09806776.2
(22) Date of filing: 24.04.2009
(51) Int. Cl.: F02B 37/22, F01D 17/16

(54) **TURBOCHARGER EQUIPPED WITH A VARIABLE NOZZLE DEVICE**
TURBOLADER MIT VARIABLER DÜSENVORRICHTUNG
TURBOCOMPRESSEUR ÉQUIPÉ DE DISPOSITIF À GÉOMÉTRIE VARIABLE

(30) Priority: 12.08.2008 KR 20080079056
(43) Date of publication of application: 25.05.2011
(73) Proprietor: Keyyang Precision Co., Ltd., Gyeongbuk 740-180 (KR)
(72) Inventor: CHUNG, Jiwoong, Seoul 140-210 (KR); SHURIPA, Vitaly A., Seoul 139-242 (KR)
(74) Representative: Prinz & Partner mbB
(86) International application number: PCT/KR2009/002147
(87) International publication number: WO 2010/018914

(56) References cited:
- EP-A1- 1 945 928
- EP-A2- 1 939 407
- DE-A1-102006 018 055
- JP-A- 2001 173 450
- JP-A- 2002 129 966
- JP-A- 2006 348 892
- KR-A- 20050 098 827
- KR-A- 20070 079 566
- US-A- 2 860 827
- US-A1- 2007 130 943
- US-A1- 2008 031 728
- US-A1- 2008 075 582

## Description

The present invention relates, in general, to a turbocharger equipped with a variable nozzle device with an insert.

In a conventional turbocharger, when operation conditions are different, there is a need to control the flow of exhaust gas to drive a turbine in order to improve efficiency of the turbocharger. In order to control the flow of the exhaust gas, a variable nozzle device has been used in which a geometrical shape of a nozzle path varies. The nozzle path is provided between an inner wall and an outer wall between the vanes arranged around the turbine, the vanes being rotatably installed so that the shapes of the nozzle paths vary, thereby controlling the flow of the exhaust gas for driving the turbine.

An engine supercharging device, which is disclosed in US Patent Nos. 2,860,827 and 3,101,926, includes a housing, a shaft rotatably supported inside the housing, a compressor wheel, a turbine rotor, a mounting unit which is separated from the compressor wheel so as to mount the turbine rotor on an end of the shaft, and a sealing unit disposed around the shaft between the compressor wheel and the turbine, and a shroud. The shroud is disposed on an outer circumference of the turbine so that it extends in an axial direction, and is equipped with a proper piston sealing ring.

A turbine controller, disclosed in US Patent No. 4,770,603, includes first and second fixing rings for guide vanes. The guide vanes and flowing channels are axially positioned between the fixing rings, so that an axial space between two of the fixing rings is defined by spacer sleeves. The two fixing rings are interconnected by a plurality of screws, and the guide vanes are rotatably mounted by a cylindrical protrusion which is disposed in close proximity to an inlet edge in correspondence with an axial hole of the fixing rings. Further, the width of the flowing channel is defined by the spacer sleeves.

According to US Patent No. 4,880,351, a stationary vane member is disposed at the center of a scroll path to divide the scroll path into an outer annular path and an inner path. The stationary vane member includes a tubular section at the center thereof, a disc section radially, extending from an axially outer annular portion of an axially middle portion of the tubular section, and stationary vanes axially extending from an outer annular portion of the disc section towards a lubrication unit casing. The tubular section is assembled to an inner leading end of the outer annular path by the medium of a pair of metal seals, and an axial leading end of the stationary vane is connected to a back plate by means of a bolt. An inner leading portion of the tubular section partially delimitates a minimum cross sectional area or a neck portion in combination with the back plate.

According to US Patent Publication No. 2007/0175216 A1, a plurality of movable vanes is provided, in which variable nozzle devices are spaced apart from each other in a circumferential direction. First and second ring members fix the movable vanes while holding them in an axial direction, a plurality of transmission members radially extends outwards from the axes of the movable vanes while being fixed to root portions of the axes of the movable vanes, and a third ring member is provided with a plurality of grooves formed in a circumferential direction so as to be coupled with radially outer leading portions of the transmission members.

According to US Patent Publication No. 2007/0130943, considered to be the closest prior art, a variable nozzle device and an exhaust housing that is mechanically and thermally insulated from the variable nozzle device are provided. Leg portions serve as spacers to delimitate a nozzle space between a nozzle ring defining an inner wall of a nozzle and an outer ring shaped like an insert defining an outer wall of the nozzle.

According to International Patent Publication No. WO2007/046798, disclosed is a cartridge including a nozzle ring, vanes, pins, vane arms and a unison ring. The cartridge includes an insert of tubular section that is sealingly accommodated in a hole of a turbine housing, and a nozzle radially outwardly extending from a leading end of the tubular section. The nozzle is disposed axially spaced apart from the nozzle ring so that the vanes extend between the nozzle ring and the nozzle. The insert is mechanically and thermally insulated from the turbine housing. Spacers are connected such that the nozzle ring is fixed to the insert and a desired space also is formed in an axial direction between the nozzle and the nozzle ring.

However, such a conventional variable vane device has several drawbacks such as: complicated structure; reduced assembly productivity upon assembly of a turbocharger; and being disposed between a relatively-higher temperature turbine housing exposed to exhaust gas and a relatively-lower temperature bearing housing, being subjected to thermal stress due to thermal gradient between the housings, which causes components of the variable nozzle device to suffer from different thermal deformation, creating a gap in a connection between the spacer and the ring, thus reducing the operation efficiency of a turbine.

Accordingly, the present invention has been made keeping in mind the above problems occurring in the related art, and is intended to provide a turbocharger having a variable nozzle device in which a retainer ring, an insert, and a turbine housing are mechanically and thermally insulated from one another, so that the operation efficiency is not reduced, the performance of sealing between the retainer ring and a nozzle ring is improved, the manufacture and assembly is simplified to improve productivity, and the design is simplified so that there is no need to provide precise clearances to a variety of components of the turbocharger, reducing the manufacturing cost.

According to the present invention, a turbocharger is provided as defined in claim 1. The turbocharger includes a compressor housing, a turbine housing, a bearing housing between the compressor housing and the turbine housing, and a variable nozzle device, the variable nozzle device including a nozzle ring, an insert between the bearing housing and the turbine housing, and a plurality of vanes, wherein the insert includes a tubular section mounted on an inner surface of an outlet of the turbine housing, and a nozzle section extending radially outwards from an end of the tubular section, wherein the nozzle section is spaced axially at a distance from the nozzle ring such that the plurality of vanes is mounted between the nozzle ring and the nozzle section.

As the turbocharger has a variable nozzle device, direct contact is prevented between the insert and the turbine housing and between the retainer ring and the turbine housing, thereby mechanically and thermally insulating the turbine housing from the components thereof. The retainer ring is connected to the relatively low temperature bearing housing, whereas the insert is connected to the relatively high temperature nozzle ring. Since the retainer ring and the insert are mechanically and thermally insulated from each other, thermal stress or deformation does not occur due to a difference in temperature between these components, thus avoiding any negative impact upon normal operation of the variable nozzle device.

Further, thermal propagation from the nozzle ring towards a radial direction is properly absorbed in the gap between the nozzle ring and the retainer ring, and the connection between the protrusion of the turbine housing and the nozzle ring is implemented through 360° on the entire circumference of the nozzle ring, thereby sealing the contact surface between the retainer ring and the nozzle ring.

Further, because of elastic restoration force of the back plate, the corresponding face of the nozzle ring comes into close contact with the hoop and the bearing housing to ensure sealing between the corresponding contact surfaces, so that the vanes and the insert are not required to be bound to each other.

Further, the insert and the hoop are integrated into one piece, and the retainer ring is mechanically connected between the insert and the nozzle ring by means of the plurality of legs, so that the variable nozzle device can be simply manufactured and assembled. Due to this simple design, there is no need to provide precise clearances to a variety of components, thus reducing manufacturing costs.
- Figure 1 is a cross-sectional view showing a turbocharger with an insert according to a first embodiment of the present invention;
- Figure 2 is a perspective view showing the insert according to the embodiment; and

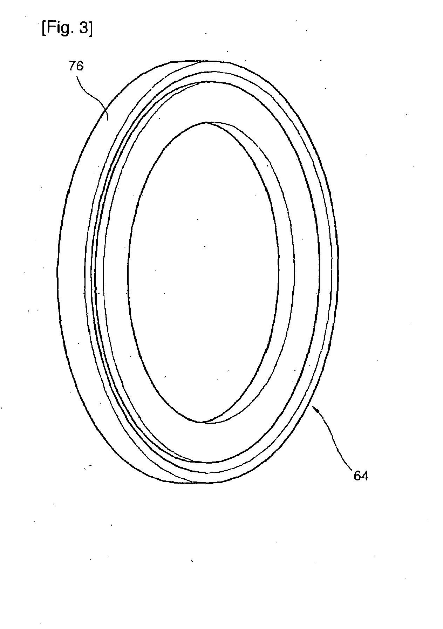

- Figure 3 is a perspective view showing a retainer ring according to the embodiment.

Hereinbelow, preferred embodiments of the present invention will be described in detail with reference to the accompanying drawings.

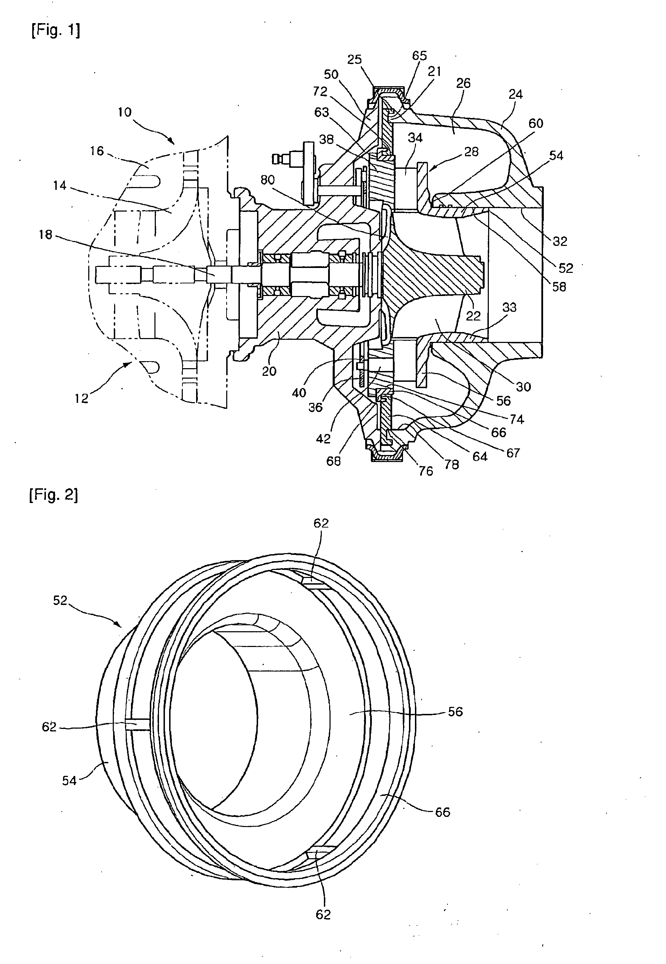

FIG. 1 illustrates a turbocharger 10 according to a first embodiment of the invention. The turbocharger 10 includes a compressor 12 which has a compressor wheel or a compressor impeller 14 mounted on a shaft 18 in a compressor housing 16. The shaft 18 is rotatably supported by a bearing which is mounted in a bearing housing 20 of the turbocharger. A turbine wheel 22 is mounted on an end side of the shaft 18 to rotate both the shaft 18 and the compressor wheel 14. The compressor compresses air introduced from an inlet and supplies the compressed air towards the intake manifold of an engine in order to improve the efficiency of the engine.

The turbocharger 10 includes a turbine housing 24 contained therein a turbine wheel 22. The turbine housing 24 in general has an annular chamber 26, through which the exhaust gas from an engine is introduced in order to drive the turbine wheel 22. The engine's exhaust gas is introduced radially inwardly from the annular chamber 26 directly to the turbine wheel 22 through a turbine nozzle 28. As the exhaust gas flows through passageways between blades of the turbine wheel, the exhaust gas that passed through the turbine wheel expands in the low pressure and is discharged out of the turbine housing through an outlet 32 in an axial direction.

The turbine nozzle 28 has a form of a variable nozzle which changes a cross section area contacting the exhaust flow in order to control the flow rate of the the low pressure and is discharged out of the turbine housing through an outlet 32 in an axial direction.

The turbine nozzle 28 has a form of a variable nozzle which changes a cross section area contacting the exhaust flow in order to control the flow rate of the exhaust gas to be introduced into the turbine wheel. The nozzle is provided with a plurality of vanes 34 arranged in a circumferential direction. The respective vanes 34 are fixed by means of pins 42, which pass through holes formed in an annular nozzle ring 38, such that they are coaxial with the turbine wheel 22. The pin 42 is mounted to the nozzle ring such that it is rotatable in its axial direction, in order to allow the vane mounted thereto to rotate. The nozzle ring 38 forms a wall face of a flow passageway of the nozzle 28. A vane arm 40 is fixedly mounted to an end side of the pin 42 that extends from the nozzle ring 38, and an annular unison ring 36 (also referred to as an actuator ring) is coupled to the vane arm. The unison ring 36 is supported so that it is axially rotatable, and is arranged coaxially with the nozzle ring 38. An actuator which is not shown is directly connected to the unison ring 36 in order to rotate it. When the unison ring 36 rotates, the vane arm 40 also rotates, causing the pin 42 to rotate about its axis. Then, the vane 34 also rotates so that the cross section area contacting the exhaust flow through the nozzle 28 varies. This variable nozzle device is similar to a conventional variable nozzle device having variable vanes.

According to the present invention, the variable nozzle device 50 includes a nozzle ring 38, vanes 34, pins 42, a vane arm 40, a unison ring 36, and an insert 52. The insert 52, as shown in detail in FIG. 2, includes a tubular section 54 that is closely fitted into an outlet 32 of the turbine housing, and a nozzle section 56 that extends radially outwards from an end of the tubular section. The nozzle section 56 is separated by a distance axially from the nozzle ring 38, so that vanes 34 can be located between the nozzle ring 38 and the nozzle section 56. The tubular section 54 is provided on an outer surface with at least one annular groove in which a sealing ring 58 is fitted in such a manner that it comes into close contact with an inner surface of the outlet 32. An outer diameter of the tubular section 54 is formed to be slightly smaller than an inner diameter of the outlet 32, forming a small slip gap therebetween. Thus, only the sealing ring 58 is brought into contact with the inner face of the outlet 32. Further, a gap 60 is formed between the nozzle section 56 and an end side of the turbine housing adjacent thereto. Accordingly, the insert 52 becomes mechanically and thermally insulated from the turbine housing 24.

A plurality of legs 62 is integrated with the insert 52 so that they are positioned between the nozzle section 56 of the insert 52 and the nozzle ring 38, so as to provide an axial gap between nozzle section and the nozzle ring as well as to fix the nozzle ring to the insert 52. The legs 62 extend a distance from the nozzle section 56 and are placed along the length of the vane 34, and to which a hoop 66 that is positioned opposite to the nozzle section 56 and faces the nozzle ring 38 is coupled, thereby separating the nozzle section 56 and the nozzle ring 38 in an axial direction. An extension is formed on an end of the leg to clamp the nozzle ring 38. The leg 62 is made of material that has excellent thermal resistance, thermal conductivity, and mechanical properties, allowing the nozzle ring 38 and the insert 52 to be thermally insulated from each other.

An annular retainer ring 64 is connected to the bearing housing so as to fix the hoop 66 and the nozzle ring 38. The retainer ring 64 is individually formed from the insert 52, so that it is mechanically and thermally insulated from the insert.

The retainer ring 64 is provided on its side face with a circular groove 67 that extends in an axial direction and in which a shoulder of the hoop is coupled so as to prevent the retainer ring 64 from moving in both radial and axial directions with respect to the bearing housing 20. The hoop 66 is provided with a circular groove 63 and a protrusion 68 that extend in a radially outward direction, and the protrusion 68 is connected with an opposite face of the nozzle ring 38 that faces the insert 52. The connection between the protrusion 68 and the nozzle ring 38 is implemented through 360° along the circumferential face of the nozzle ring, thereby sealing a border face between the retainer ring 64 and the nozzle ring 38. The protrusion 68 serves to restrict the nozzle ring 38 from moving in an axial direction, i.e. towards the nozzle section 56, together with the legs 62.

The retainer ring 64 is provided with an inner circumferential face 72 that faces an outer circumferential face 74 of the nozzle ring 38. The inner circumferential face 72 and the outer circumferential face 74 are arranged to have a gap therebetween, so that bending occurring on the retainer ring and legs due to differential thermal expansion or other reasons is absorbed in the gap, thereby preventing the nozzle ring from being displaced radially.

The retainer ring 64 is provided with a side circular groove 65 that accommodates the protrusion 21 formed on the turbine housing 24. This configuration restricts the retainer ring 64 from expanding in a radial direction. This is because the retainer ring 64 expands due to thermal energy during heating and the temperature of heat decreases in the radial direction. The protrusion 21 expands to a greater degree in the radial direction. At a contact surface 25 between the retainer ring 64 and the protrusion 21, an interference-fit occurs due to a difference of thermal expansion between the retainer ring 64 and the protrusion 21, thereby improving a sealing feature therebetween. The turbine housing 24 is fixed to the bearing housing 20 such that a gap is provided between an inner face 78 of the turbine housing and an outer surface 76 of the retainer ring. This gap mechanically and thermally insulates the turbine housing from the retainer ring.

The variable nozzle device 50 includes a back plate 80. The back plate 80 is mounted between the nozzle ring 38 and the bearing housing 20 when the bearing housing is mounted. The back plate 80 serves as a seal between the nozzle ring and the bearing housing so as to prevent hot exhaust gas from being introduced into a gap between the vane arm 40 and the unison ring 42. The back plate 80 is made of an elastic material such as spring steel, and a cover thereof is axially compressed between the nozzle ring 38 and the bearing housing 20. Due to restoration force of the back plate, the back plate 80 forcedly presses against the corresponding faces of the nozzle ring and the bearing housing, thereby having a sealing effect on the gap between adjacent components.

## Claims

1. A turbocharger comprising a compressor housing (16),
a turbine housing (24), a bearing housing (20) between the compressor housing (16) and the turbine housing (24), and a variable nozzle device (50), the variable nozzle device (50) including a nozzle ring (38), an insert (52) between the bearing housing (20) and the turbine housing (24), and a plurality of vanes (34),
wherein the insert (52) includes a tubular section (54) mounted on an inner surface of an outlet (32) of the turbine housing (24), and a nozzle section (56) extending radially outwards from an end of the tubular section (54),
wherein said tubular section (54) includes on an outer circumferential surface at least one circular groove in which a sealing ring (58) is mounted to come into close contact with an inner surface of the outlet (32), and a gap (60) is provided between the nozzle section (56) and an end side of the turbine housing (24) adjacent to the nozzle section (56), and
wherein the nozzle section (56) is spaced axially at a distance from the nozzle ring (38) such that the plurality of vanes (34) is mounted between the nozzle ring (38) and the nozzle section (56),
**characterized in that** a plurality of legs (62) is integrated with the insert (52) such that they are positioned between the nozzle section (56) of the insert (52) and the nozzle ring (38), so as to space an axial gap between the nozzle section (56) and the nozzle ring (38) as well as to fix the nozzle ring (38) to the insert (52), wherein the legs (62) extend a distance from the nozzle section (56) and are placed along the length of the vane (34), and a hoop (66) is coupled to the legs (62), the hoop (66) being positioned opposite to the nozzle section (56) and facing the nozzle ring (38), and
wherein the hoop (66) is provided with a circular groove (63) and a protrusion (68) that extend in a radially outward direction, and the protrusion (68) is connected with an opposite face of the nozzle ring (38) that faces the insert (52), along the entire circumference thereof.

2. The turbocharger according to claim 1, wherein an annular retainer ring (64) is connected to the bearing housing (20) so as to fix the hoop (66) and the nozzle ring (38).

3. The turbocharger according to claim 2, wherein the retainer ring (64) is provided on its side face with a circular groove (67) that extends in an axial direction and to which a shoulder of the hoop (66) is coupled.

4. The turbocharger according to claim 3, wherein the retainer ring (64) is provided with an inner circumferential face (72) that faces an outer circumferential face (74) of the nozzle ring (38), wherein the inner circumferential face and the outer circumferential face are arranged to have a gap therebetween.

5. The turbocharger according to claim 4, wherein the retainer ring (64) is provided with a side circular groove (65) that accommodates a protrusion (21) formed on the turbine housing (24).

6. The turbocharger according to claim 5, wherein the turbine housing (24) is fixed to the bearing housing (20) such that a gap is provided between an inner face of the turbine housing (24) and an outer surface of the retainer ring (64).

7. The turbocharger according to claim 1, wherein a back plate (80) is mounted between the nozzle ring (38) and the bearing housing (20) so as to seal a portion between the nozzle ring (38) and the bearing housing (20).

8. The turbocharger according to claim 7, wherein the back plate (80) is made of an elastic material such as spring steel, and a cover thereof is axially compressed between the nozzle ring (38) and the bearing housing (20).

## Patentansprüche

1. Turbolader mit einem Kompressorgehäuse (16),
einem Turbinengehäuse (24), einem Lagergehäuse (20) zwischen dem Kompressorgehäuse (16) und dem Turbinengehäuse (24) sowie einer variablen Düsenvorrichtung (50), wobei die variable Düsenvorrichtung (50) einen Düsenring (38), einen Einsatz (52) zwischen dem Lagergehäuse (20) und dem Turbinengehäuse (24) sowie mehrere Schaufeln (34) aufweist,
wobei der Einsatz (52) einen rohrförmigen Abschnitt (54), der an einer Innenfläche eines Auslasses (32) des Turbinengehäuses (24) angebracht ist, und einen Düsenabschnitt (56) aufweist, der sich von einem Ende des rohrförmigen Abschnitts (54) radial nach außen erstreckt,
wobei der rohrförmige Abschnitt (54) an einer Außenumfangsfläche wenigstens eine kreisförmige Nut aufweist, in der ein Dichtungsring (58) so angebracht ist, dass er eng in Anlage an eine Innenfläche des Auslasses (32) gelangt, und zwischen dem Düsenabschnitt (56) und einer Stirnseite des Turbinengehäuses (24) angrenzend an den Düsenabschnitt (56) ein Spalt (60) vorgesehen ist, und
wobei der Düsenabschnitt (56) axial in einem solchen Abstand von dem Düsenring (38) angeordnet ist, dass die mehreren Schaufeln (34) zwischen dem Düsenring (38) und dem Düsenabschnitt (56) angebracht sind,
**dadurch gekennzeichnet, dass** mehrere Stege (62) so mit dem Einsatz (52) integriert sind, dass sie zwischen dem Düsenabschnitt (56) des Einsatzes (52) und dem Düsenring (38) so gelegen sind, dass sie zwischen dem Düsenabschnitt (56) und dem Düsenring (38) einen axialen Spalt als Abstand herstellen sowie den Düsenring (38) an dem Einsatz (52) befestigen, wobei die Stege (62) sich ein Stück von dem Düsenabschnitt (56) erstrecken und entlang der Länge der Schaufel (34) angeordnet sind und ein Reifen (66) mit den Stegen (62) gekoppelt ist, wobei der Reifen (66) gegenüber dem Düsenabschnitt (56) und dem Düsenring (38) zugewandt gelegen ist, und
wobei der Reifen (66) mit einer kreisförmigen Nut (63) und einem Vorsprung (68) versehen ist, die sich in einer Richtung radial nach außen erstrecken, und der Vorsprung (68) mit einer gegenüberliegenden Fläche des Düsenrings (38) verbunden ist, die entlang ihres gesamten Umfangs dem Einsatz (52) zugewandt ist.

2. Turbolader nach Anspruch 1, wobei zur Befestigung des Reifens (66) und des Düsenrings (38) ein ringförmiger Haltering (64) mit dem Lagergehäuse (20) verbunden ist.

3. Turbolader nach Anspruch 2, wobei der Haltering (64) auf seiner Seitenfläche mit einer kreisförmigen Nut (67) versehen ist, die sich in einer Axialrichtung erstreckt und mit der ein Absatz des Reifens (66) gekoppelt ist.

4. Turbolader nach Anspruch 3, wobei der Haltering (64) mit einer Innenumfangsfläche (72) versehen ist, die einer Außenumfangsfläche (74) des Düsenrings (38) gegenüberliegt, wobei die Innenumfangsfläche und die Außenumfangsfläche so angeordnet sind, dass zwischen ihnen ein Spalt vorhanden ist.

5. Turbolader nach Anspruch 4, wobei der Haltering (64) mit einer seitlichen, kreisförmigen Nut (65) versehen ist, in der ein an dem Turbinengehäuse (24) gebildeter Vorsprung (21) aufgenommen ist.

6. Turbolader nach Anspruch 5, wobei das Turbinengehäuse (24) so an dem Lagergehäuse (20) befestigt ist, dass zwischen einer Innenfläche des Turbinengehäuses (24) und einer Außenfläche des Halterings (64) ein Spalt vorgesehen ist.

7. Turbolader nach Anspruch 1, wobei zur Abdichtung eines Bereichs zwischen dem Düsenring (38) und dem Lagergehäuse (20) eine Rückplatte (80) zwischen dem Düsenring (38) und dem Lagergehäuse (20) angebracht ist.

8. Turbolader nach Anspruch 7, wobei die Rückplatte (80) aus einem nachgiebigen Material wie etwa Federstahl besteht und eine Abdeckung der Rückplatte zwischen dem Düsenring (38) und dem Lagergehäuse (20) axial zusammengedrückt ist.

## Revendications

1. Turbocompresseur, comportant un boîtier de compresseur (16),
un boîtier de turbine (24), un boîtier de palier (20) entre le boîtier de compresseur (16) et le boîtier de turbine (24), et un dispositif de buse variable (50), le dispositif de buse variable (50) présentant une bague de buse (38), un insert (52) entre le boîtier de palier (20) et le boîtier de turbine (24), ainsi qu'une pluralité de pales (34),
l'insert (52) présentant un tronçon tubulaire (54) monté sur une surface intérieure d'une sortie (32) du boîtier de turbine (24), et un tronçon de buse (56) s'étendant radialement vers l'extérieur depuis une extrémité du tronçon tubulaire (54),
le tronçon tubulaire (54) présentant sur une surface circonférentielle extérieure au moins une rainure circulaire dans laquelle une bague d'étanchéité (58) est montée pour parvenir en contact serré avec une surface intérieure de la sortie (32), et une fente (60) étant prévue entre le tronçon de buse (56) et un côté d'extrémité du boîtier de turbine (24) de manière adjacente au tronçon de buse (56), et
le tronçon de buse (56) étant axialement espacé d'une telle distance de la bague de buse (38) que la pluralité de pales (34) est montée entre la bague de buse (38) et le tronçon de buse (56),
**caractérisé en ce qu'**une pluralité de branches (62) est intégrée avec l'insert (52) de manière à être positionnée entre le tronçon de buse (56) de l'insert (52) et la bague de buse (38) de façon à réaliser une fente axiale entre le tronçon de buse (56) et la bague de buse (38) et à fixer la bague de buse (38) sur l'insert (52), les branches (62) s'étendant à distance du tronçon de buse (56) et étant placées selon la longueur de la pale (34), et un anneau (66) étant relié aux branches (62), l'anneau (66) étant agencé en face du tronçon de buse (56) et étant tourné vers la bague de buse (38), et
l'anneau (66) étant pourvu d'une rainure circulaire (63) et d'une saillie (68) qui s'étendent dans un sens radialement vers l'extérieur, et la saillie (68) étant reliée à une face opposée de la bague de buse (38) tournée vers l'insert (52) sur toute la périphérie de celle-ci.

2. Turbocompresseur selon la revendication 1, dans lequel une bague de retenue annulaire (64) est reliée au boîtier de palier (20) de manière à fixer l'anneau (66) et la bague de buse (38).

3. Turbocompresseur selon la revendication 2, dans lequel la bague de retenue (64) est pourvue sur sa face latérale d'une rainure circulaire (67) qui s'étend dans un sens axial et à laquelle un épaulement de l'anneau (66) est relié.

4. Turbocompresseur selon la revendication 3, dans lequel la bague de retenue (64) est pourvue d'une face circonférentielle intérieure (72) qui est tournée vers une face circonférentielle extérieure (74) de la bague de buse (38), la face circonférentielle intérieure et la face circonférentielle extérieure étant agencées de manière à ce qu'une fente soit réalisée entre elles.

5. Turbocompresseur selon la revendication 4, dans lequel la bague de retenue (64) est pourvue d'une rainure circulaire latérale (65) qui loge une saille (21) réalisée sur le boîtier de turbine (24).

6. Turbocompresseur selon la revendication 5, dans lequel le boîtier de turbine (24) est fixé au boîtier de palier (20) de manière à ce qu'une fente soit prévue entre une face intérieure du boîtier de turbine (24) et une surface extérieure de la bague de retenue (64).

7. Turbocompresseur selon la revendication 1, dans lequel une plaque arrière (80) est montée entre la bague de buse (38) et le boîtier de palier (20) de manière à étancher un tronçon entre la bague de buse (38) et le boîtier de palier (20).

8. Turbocompresseur selon la revendication 7, dans lequel la plaque arrière (80) est réalisée en une matière élastique telle qu'un acier à ressort, et un recouvrement de celle-ci est axialement comprimé entre la bague de buse (38) et le boîtier de palier (20).
